# EUROPEAN PATENT APPLICATION

(11) **EP 4 181 289 A1**
(43) Date of publication of application: **17.05.2023**
(21) Application number: 21883041.2
(22) Date of filing: 28.09.2021
(51) Int. Cl.: H01M 50/24, H01M 50/20

(54) **BATTERY MODULE AND BATTERY PACK COMPRISING SAME**

(30) Priority: 22.10.2020 KR 20200137479
(71) Applicant: LG Energy Solution, Ltd., Seoul 07335 (KR)
(72) Inventor: LEE, Junghoon, Daejeon 34122 (KR); SEONG, Junyeob, Daejeon 34122 (KR); JUNG, Hyemi, Daejeon 34122 (KR); KIM, Kwangmo, Daejeon 34122 (KR); BYOUN, Dayoung, Daejeon 34122 (KR)
(74) Representative: Plasseraud IP
(86) International application number: PCT/KR2021/013263
(87) International publication number: WO 2022/085969

(57) **Abstract**

A battery pack according to an embodiment of the present disclosure includes a plurality of battery modules including a battery cell stack in which a plurality of battery cells are stacked, and a barrier layer interposed between battery cells adjacent to each other among the plurality of battery cells, wherein the barrier layer has a different thickness in accordance with the position.

## Description

### [TECHNICAL FIELD]

### Cross Citation with Related Application(s)

This application claims the benefit of Korean Patent Application No. 10-2020-0137479 filed on October 27, 2020 with the Korean Intellectual Property Office, the disclosure of which is incorporated herein by reference in its entirety.

The present disclosure relates to a battery module and a battery pack including the same, and more particularly, to a battery module that effectively delays a heat propagation speed between battery cells, and a battery pack including the same.

### [BACKGROUND ART]

As technology development and demands for mobile devices increase, the demand for batteries as energy sources is rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

The middle or large-sized battery module is preferably manufactured so as to have as small a size and weight as possible. For this reason, a prismatic battery, a pouch-type battery or the like, which can be stacked with high integration and has a small weight to capacity ratio, is usually used as a battery cell of the middle or large-sized battery module. Meanwhile, in order to protect the battery cell stack from external impact, heat or vibration, the battery module may include a module frame in which a front surface and rear surface are opened to house the battery cell stack in an internal space.

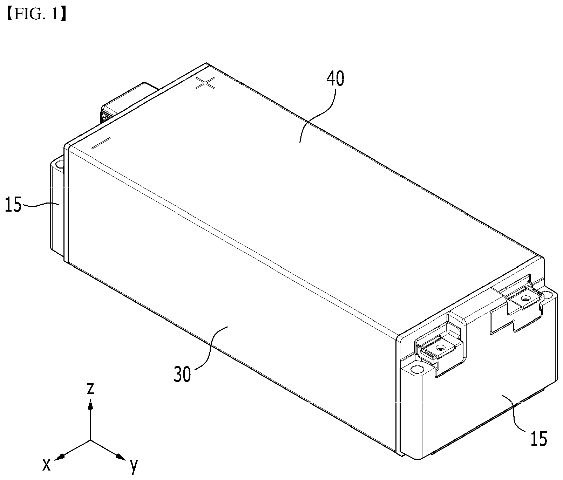

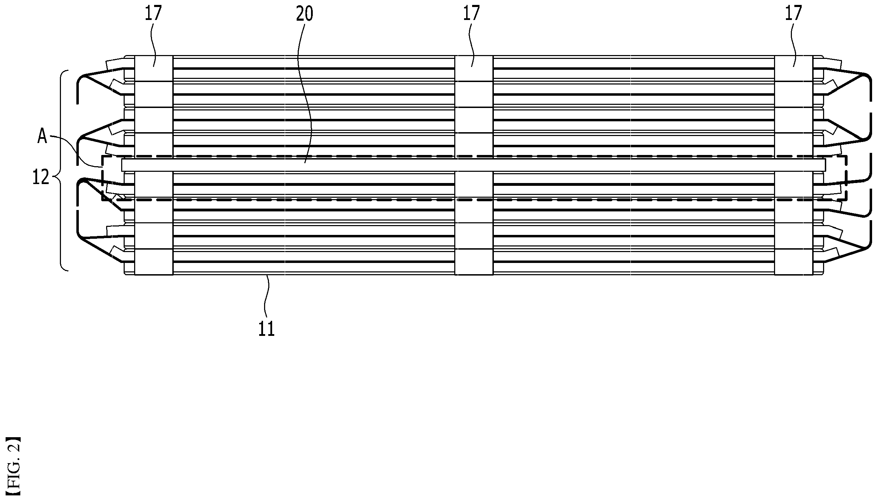

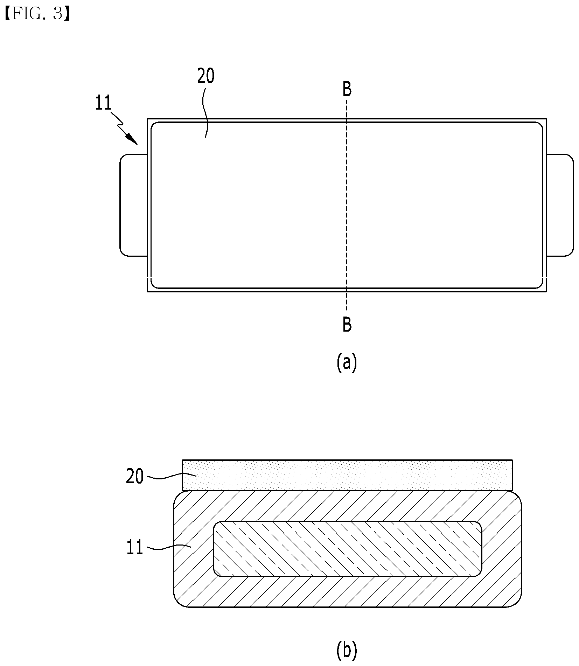

Fig. 1 is a perspective view of a conventional battery module. Fig. 2 is a top view of a battery cell stack included in a conventional battery module. Fig. 3 (a) is a top view of the region A of Fig. 2 as viewed from above, and Fig. 3 (b) is a cross-sectional view taken along the cutting surface B-B of (a).

Referring to Figs. 1 and 2, the conventional battery module includes a battery cell stack 12 in which a plurality of battery cells 11 are stacked in one direction, module frames 30 and 40 for accommodating the battery cell stack 12, an end plate 15 for covering the front and rear surfaces of the battery cell stack 12. The module frames 30 and 40 include a lower frame 30 for covering the lower and both side surfaces of the battery cell stack 12, and an upper plate 40 for covering the upper surface of the battery cell stack 12.

In addition, the battery cell stack 12 includes a fixing member 17 for fixing the plurality of battery cells 11 to each other, and the fixing member 17 is located at the central part and/or the end part of the battery cell stack 12. Further, a compression pad 20 is located between a pair of battery cells adjacent to each other in the battery cell stack 12.

Referring to Figs. 2 and 3, the compression pad 20 located in the conventional battery cell stack is in contact with the upper surface or the lower surface of the battery cells 11. The compression pad 20 can absorb the impact propagated to adjacent battery cells 11. Further, when the battery cell 11 ignites, the heat propagation speed can be delayed due to the thickness possessed by the compression pad 20. However, when a swelling phenomenon occurs in the charging/discharging process of the battery cells 11, pressure and/or heat is applied to the compression pad 20. At this time, the compression rate of the conventional compression pad 20 appears differently in accordance with the position, and thus the physical properties of the compression pad 20 may be changed. In addition, when the battery cells 110 ignite, secondary cell ignition may occur due to heat conduction between adjacent battery cells 11 and external heat conduction caused by flames generated in the battery cells 11. For this reason, it is difficult to sufficiently perform the role of delaying the heat propagation speed by using only the conventional compression pad 20. Therefore, unlike the conventional one, there is a need to develop a battery module that effectively delays the heat propagation speed between battery cells even when a swelling phenomenon occurs.

### [DETAILED DESCRIPTION OF THE INVENTION]

### [Technical Problem]

It is an object of the present disclosure to provide a battery module that effectively delays a heat propagation speed between battery cells, and a battery pack including the same.

However, the technical problem to be solved by embodiments of the present disclosure is not limited to the above-described problems, and can be variously expanded within the scope of the technical idea included in the present disclosure.

### [Technical Solution]

According to one embodiment of the present disclosure, there is provided a battery module comprising: a plurality of battery modules including a battery cell stack in which a plurality of battery cells are stacked, and a barrier layer interposed between battery cells adjacent to each other among the plurality of battery cells, wherein the barrier layer has a different thickness in accordance with the position.

The thickness of the barrier layer may increase toward the edge with respect to the surface facing a body part of the battery cell.

The barrier layer may include a first barrier part that covers the body part of the battery cell, and a second barrier part that extends from the first barrier part and covers a top part of the battery cell.

A thickness of the first barrier part may be larger than a thickness of the second barrier part.

The second barrier part may be formed of a flexible material.

The top part of the battery cell may include a first region covered by the second barrier part and a second region not covered by the second barrier part.

The barrier layer may further include a third barrier part that covers the end part of the battery cell around the electrode lead protruding from the battery cell.

An opening through which the electrode lead passes may be formed in the third barrier part. The barrier layer may be formed of a flame retardant member.

The barrier layer may be formed of a silicon foam pad or a mica sheet.

The barrier layer may include at least two or more, and at least two or more battery cells may be located between two adjacent barrier layers among the barrier layers.

The barrier layer may cover one side of both surfaces of the battery cell, extend from an upper side of the barrier layer and cover a portion of the other side of the battery cell.

The barrier layer may induce the direction of the flame generated in the battery cell due to the asymmetric structure.

According to another embodiment of the present disclosure, there is provided a battery pack comprising the above-mentioned battery module.

### [ADVANTAGEOUS EFFECTS]

According to embodiments of the present disclosure, the barrier layer formed between a pair of battery cells adjacent to each other in the battery cell stack functions as a flame retardant member, thereby capable of delaying the heat transfer speed between adjacent battery cells when a battery cell ignites.

Further, the barrier layer is applied not only to the body part of the battery cell but also to the top part and lead part of the battery cell extending therefrom, thereby capable of delaying the heat transfer speed into a battery cell in which no flame occurs by the cell external flame.

In addition, the barrier layer is formed so as to have a different thickness for each location, thereby lowering the compressibility of the barrier layer during cell swelling to maximize the performance as a flame retardant member, and thus effectively delaying the heat propagation time between the battery cells.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view of a conventional battery module;
Fig. 2 is a top view of a battery cell stack contained in a conventional battery module.
Fig. 3 (a) is a top view of the region A of Fig. 2 as viewed from above, and Fig. 3 (b) is a cross-sectional view taken along the cutting surface B-B of (a);
Fig. 4 is a diagram showing a method of forming a battery cell stack according to a comparative example;
Fig. 5 is a diagram showing a method of forming a battery cell stack included in a battery module according to an embodiment of the present disclosure;
Fig. 6 is a perspective view showing one battery cell included in the battery cell stack of Fig. 5;
Fig. 7 is a front view showing a barrier layer surrounding one battery cell included in the battery cell stack of Fig. 5;
Fig. 8 is a perspective view showing a battery cell stack formed by combining the battery cells of Fig. 5;
Fig. 9 is a plan view showing a barrier layer formed on a battery cell body part included in a battery module according to another embodiment of the present disclosure;
Fig. 10 is a cross-sectional view taken along the cutting line P-P of Fig. 9;
Fig. 11 is a perspective view showing a barrier layer covering a battery cell according to another embodiment of the present disclosure;
Fig. 12 is a perspective view of the battery cell of Fig. 11 as viewed from the surface of opposite side by rotating 180 degrees;
Fig. 13 is a perspective view showing a battery cell stack formed by using the battery cell and a barrier layer of Fig. 11; and
Fig. 14 is a perspective view showing a path through which a flame is discharged when the battery cell ignites according to the embodiment of Fig. 11.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are shown to be exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity. Further, throughout the specification, when a portion is referred to as "including" a certain component, it means that the portion can further include other components, without excluding the other components, unless otherwise stated. Further, throughout the specification, when referred to as "planar", it means when a target portion is viewed from the upper side, and when referred to as "cross-sectional", it means when a target portion is viewed from the side of a cross section cut vertically.

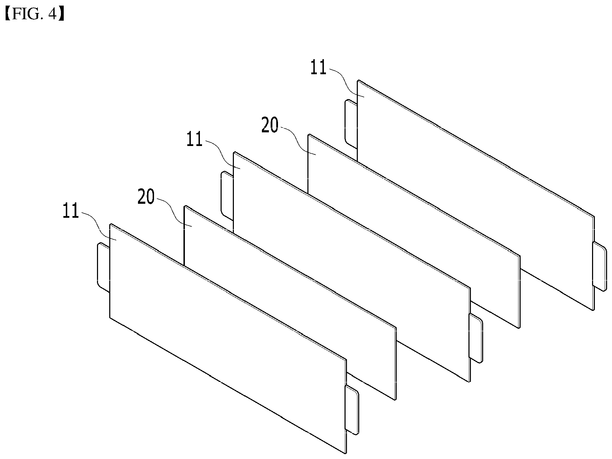

Fig. 4 is a diagram showing a method of forming a battery cell stack according to a comparative example.

Referring to Fig. 4, in the step of stacking the battery cells 11, they can be stacked by interposing a compression pad 20 between battery cell 11 and battery cell 11 adjacent to each other. After stacking the compression pad 20, stacking of the battery cells 11 can be continuously performed again. At this time, the compression pad 20 may have a constant thickness. The compression pad 20 can play a role in preventing cell swirling and can delay heat propagation to some extent when the cell ignites. The battery cells 11 and the compression pad 20 are stacked to form a battery cell stack, and subsequently, subjected to a lead welding process and a module frame process to form a battery module.

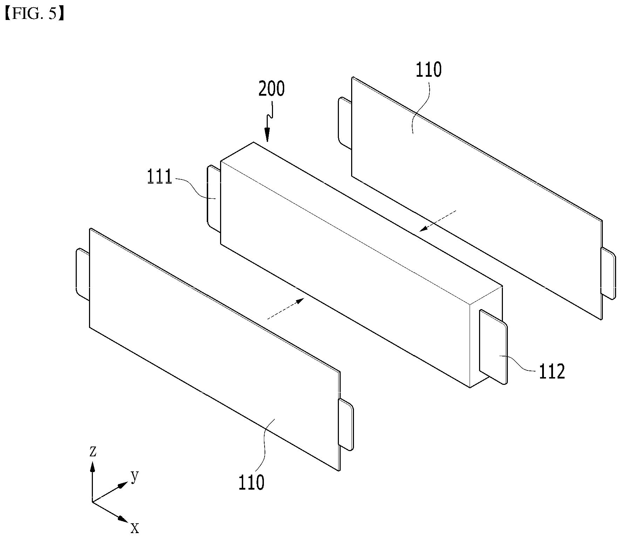

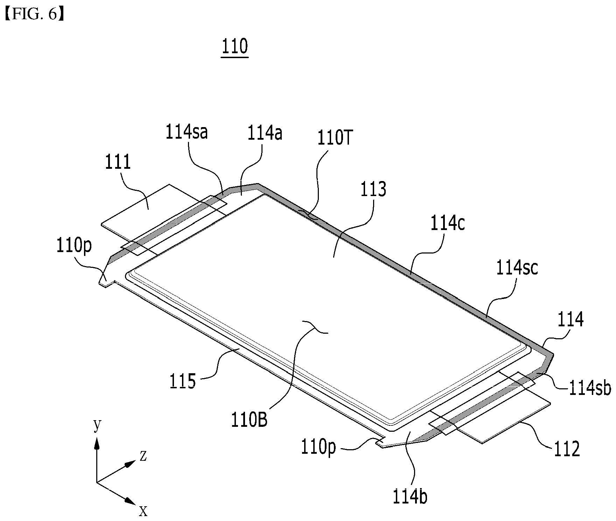

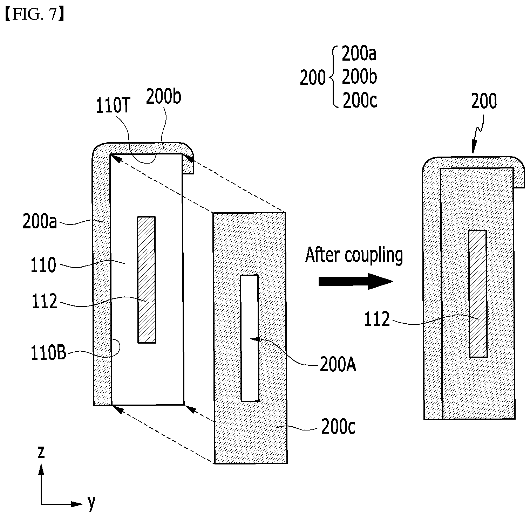

Fig. 5 is a diagram showing a method of forming a battery cell stack included in a battery module according to an embodiment of the present disclosure. Fig. 6 is a perspective view showing one battery cell included in the battery cell stack of Fig. 5. Fig. 7 is a front view showing a barrier layer surrounding one battery cell included in the battery cell stack of Fig. 5.

Referring to Fig. 5, the battery cell stack included in the battery module according to the embodiment of the present disclosure is formed by stacking a plurality of battery cells 110, and includes a barrier layer 200 interposed between battery cells 110 adjacent to each other among the plurality of battery cells 110. The barrier layer 200 is formed of a flame retardant member. At this time, the barrier layer 200 may be formed of a silicon foam pad or a mica sheet. The battery module includes at least two barrier layers 200, and although not shown, at least two or more battery cells 110 may be located between two adjacent barrier layers 200 among the barrier layers 200.

The battery cell 110 according to the embodiment of the present disclosure is preferably a pouch-type battery cell. For example, referring to Fig. 6, the battery cell 110 according to the embodiment of the present disclosure has a structure in which two electrode leads 111 and 112 face each other and protrude from one end part 114a and the other end part 14b of the battery body 113, respectively. The battery cell 110 can be manufactured by adhering both end parts 114a and 114b of a battery case 114 and both side surfaces 114c connecting them in a state in which an electrode assembly (not shown) is accommodated in the battery case 114. In other words, the battery cell 110 according to the embodiment of the present disclosure has a total of three sealing parts 114sa, 114sb, 114sc, and the sealing parts 114sa, 114sb, 114sc has a structure being sealed by a method such as heat fusion, and the other side part may be formed of a connection part 115. A direction from end part 114a to end part 114b is defined as a longitudinal direction of the battery cell 110. A direction from one side part 114c, which connects between both end parts 114a and 114b, to the connection part 115 is defined as a width direction of the battery cell 110.

The connection part 115 is a region extending long along one edge of the battery cell 110, and a protrusion part 110p of the battery cell 110 can be formed at the end part of the connection part 115 and can protrude in a direction perpendicular to the direction in which the connection part 115 extends. The protrusion part 110p may be located between one of the sealing parts 114sa and 114sb of both end parts 114a and 114b of the battery case 114 and the connection part 115.

The battery case 114 generally has a laminate structure of a resin layer/a metal thin film layer/a resin layer. For example, when the surface of the battery case is formed of an O (oriented)-nylon layer, it tends to slide easily due to external impact when stacking a plurality of battery cells to form a medium or large-sized battery module. Therefore, in order to prevent this problem and maintain a stable stacked structure of battery cells, a battery cell stack can be formed by attaching an adhesive member such as a cohesive-type adhesive such as a double-sided tape or a chemical adhesive bonded by chemical reaction during adhesion to the surface of the battery case. In the embodiment of the present disclosure, the battery cell stack 120 can be stacked in the y-axis direction.

Referring to Figs. 5 to 7, the barrier layer 200 according to the embodiment of the present disclosure may include a first barrier part 200a that covers the body part 110B of the battery cell 110, and a second barrier part 200b that extends from the first barrier part 200a and covers the top part 110T of the battery cell 110. The body part 110B of the battery cell 110 refers to one surface of the battery cell 110 facing the y-axis direction, which is the direction in which the battery cells 110 are stacked, and the top part 110T of the battery cell 110 may be a portion corresponding to one side part 114c connecting both end parts 114a and 114b of the battery case 114. In other words, the top part 110T of the battery cell 110 may refer to the upper end part based on the width direction of the battery cell 110.

At this time, the thickness of the first barrier part 200a may be larger than the thickness of the second barrier part 200b. The second barrier part 200b can be formed of a flexible material. The first barrier part 200a can be formed to be relatively thick, thereby increasing the flame retardant performance of interrupting heat propagation between adjacent battery cells 110, and due to the second barrier part 200b formed to be relatively thin, the occurrence of a gap between the module frame accommodating the battery cell stack and the upper end of the battery cell 110 can be minimized. In addition, the second barrier part 200b is formed of a flexible material, so that the double-side folding structure of the upper end of the battery cell 110 can be closely covered.

Referring to Fig. 7, the barrier layer 200 according to the embodiment of the present disclosure may further include a third barrier part 200c covering an end part of the battery cell 110 around the electrode leads 111 and 112 protruding from the battery cell 110. An opening 200A through which the electrode leads 111 and 112 pass may be formed in the third barrier part 200c.

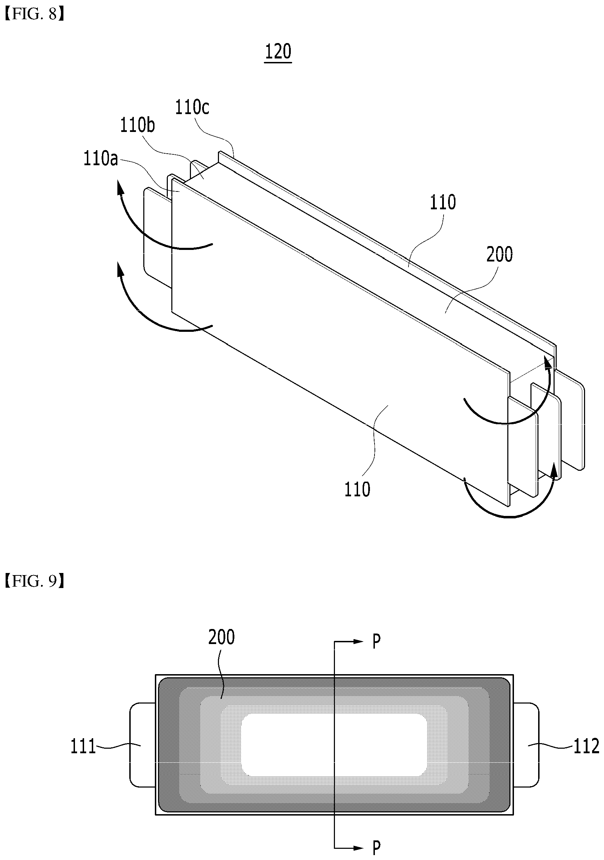

Fig. 8 is a perspective view showing a battery cell stack formed by combining the battery cells of Fig. 5.

Referring to Figs. 5 to 8, the battery module including the battery cell stack according to the embodiment of the present disclosure includes a first barrier part 200a, so that heat conduction from the ignited battery cell 110 to the adjacent battery cell 110 can be interrupted when the cell ignites. In addition, in addition to the body part 110B of the battery cell 110, the battery module includes a second barrier part 200b covering the top part 110T and a third barrier part 200c covering the end part of the battery cell 110 around the electrode leads 111 and 112, thereby capable of cancelling the effect of heat conduction to the battery cell 110 in which no flame occurs by the external flame. For example, referring to Fig. 8 , when ignition occurs in the first battery cell 110a, heat conduction due to an external flame can be cancelled from the second battery cell 110b to which the barrier layer 200 is applied.

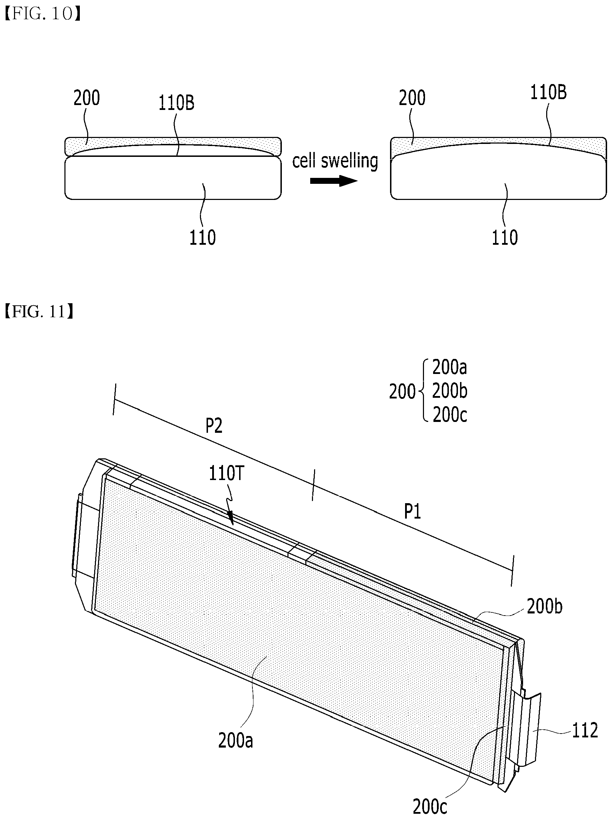

Fig. 9 is a plan view showing a barrier layer formed on a battery cell body part included in a battery module according to another embodiment of the present disclosure. Fig. 10 is a cross-sectional view taken along the cutting line P-P of Fig. 9.

Referring to Figs. 9 and 10 the barrier layer 200 according to the embodiment of the present disclosure may have a different thickness in accordance with the position. Specifically, the thickness of the barrier layer 200 may increase toward the edge with respect to the surface facing the body portion 110B of the battery cell 110. Conventionally, the cell swelling phenomenon caused by charging of the battery cell 110 has not been considered, and the compression pad 20 described with reference to Fig. 4 having the same thickness in all regions has been applied as a barrier layer. When the compression pad is compressed due to the cell swelling phenomenon, the physical properties of the barrier layer can be changed. On the contrary, according to the embodiment of the present disclosure, the thickness of the barrier layer 200 can be differently applied for each region in consideration of the cell swelling phenomenon. Therefore, during the cell swelling phenomenon, the compressibility of the barrier layer 200 can be lowered to maximize the performance of the flame retardant member, thereby effectively delaying the heat propagation time between the battery cells 110. The description of the battery cell 110 described with reference to Figs. 5 to 8 can also be applied to the embodiment of the present disclosure. For example, the thickness of the first barrier part 200a described with reference to Figs. 5 to 8 can be formed differently in accordance with the position.

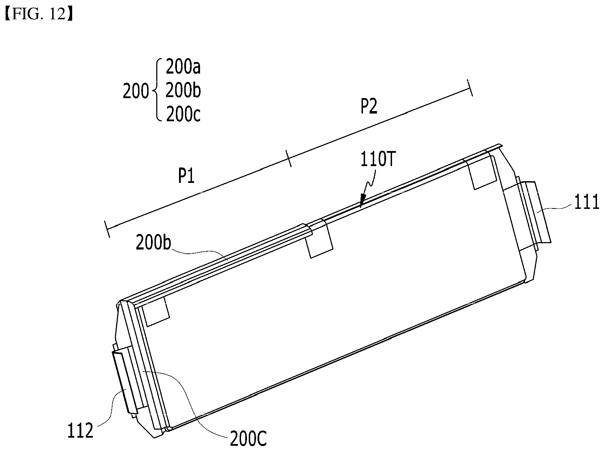

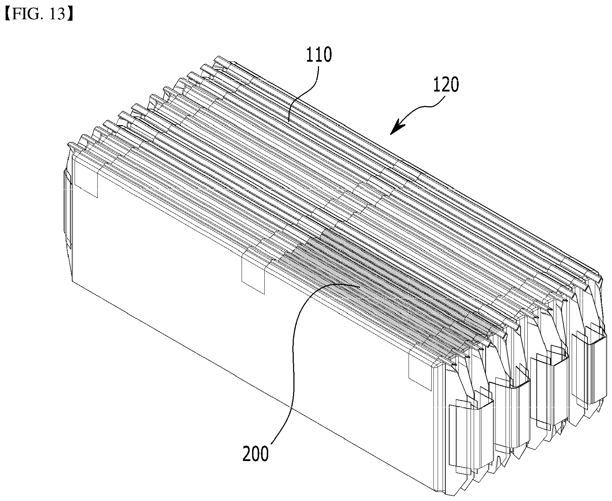

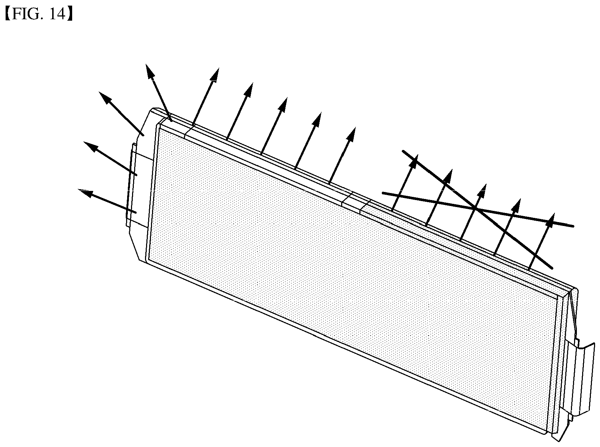

Fig. 11 is a perspective view showing a barrier layer covering a battery cell according to another embodiment of the present disclosure. Fig. 12 is a perspective view of the battery cell of Fig. 11 as viewed from the surface of opposite side by rotating 180 degrees. Fig. 13 is a perspective view showing a battery cell stack formed by using the battery cell and a barrier layer of Fig. 11. Fig. 14 is a perspective view showing a path through which a flame is discharged when the battery cell ignites according to the embodiment of Fig. 11.

Referring to Figs. 11 and 12, the barrier layer 200 can cover one side of both surfaces of the battery cell 110, extend from the upper side of the barrier layer 200 and cover a portion of the other side of the battery cell 110. At this time, the top part 110T of the battery cell 110 may include a first region P1 covered by the second barrier part 200b and a second region P2 not covered by the second barrier part 200b. At this time, the third barrier part 200c may be formed only at one end of the battery cell 110 adjacent to the first region P1.

Meanwhile, the first region P1 may be a partial region in the longitudinal direction covered by the second barrier part 200b of the top part 110T of the battery cell 110. The first region P1 and the second region P2 may be located at different positions in the longitudinal direction of the battery cell 110. The first region P1 may be adjacent to one end of the battery cell 110, and the second region P2 may be adjacent to the other end of the battery cell 110.

The barrier layer 200 according to the embodiment of the present disclosure may induce the direction of the flame generated in the battery cell 110 due to the asymmetric structure. For example, by forming the top part 110T of the battery cell 110 including the first region P1 and the second region P2, the flame may be induced in the left direction of the battery cell 110 as shown in Fig. 14.

As described in the embodiments of Figs. 5 to 7, the thickness of the first barrier part 200a may be larger than the thickness of the second barrier part 200b. The second barrier part 200b may be formed of a flexible material. The first barrier portion 200a is formed to be relatively thick, thereby capable of increasing the flame retardant performance of interrupting heat propagation between adjacent battery cells 110, and due to the second barrier part 200b formed to be relatively thin, the occurrence of a gap between the upper end of the battery cell 110 and the module frame accommodating the battery cell stack can be minimized. In addition, the second barrier part 200b can be formed of a flexible material so as to closely cover the double-side folding structure of the upper end of the battery cell 110. If there is a gap between the second barrier part 200b covering the upper end of the battery cell 110 and the upper end of the module frame, induction of the flame direction may not be performed well.

Referring to Fig. 13, the battery cell stack 120 according to the embodiment of the present disclosure may include a plurality of battery cells 110 covered by the barrier layer 200. Because it is difficult to know which of the battery cells 110 is ignited among the stacked battery cells 110, a plurality of battery cells 110 covered by the barrier layer 200 can be applied to design flame induction and heat propagation interruption.

Meanwhile, one or more of the battery modules according to embodiments of the present disclosure can be packaged in a pack case to form a battery pack.

The above-mentioned battery module and a battery pack including the same may be applied to various devices. These devices can be applied to vehicle means such as an electric bicycle, an electric vehicle, a hybrid vehicle, but the present disclosure is not limited thereto and can be applied to various devices that can use the battery module and the battery pack including the same, which also belongs to the scope of the present disclosure.

Although the preferred embodiments of the present disclosure have been described in detail above, the scope of the present disclosure is not limited thereto, and various modifications and improvements made by those skilled in the art using the basic concepts of the present disclosure defined in the following claims also belong to the scope of rights.

### [Description of Reference Numerals]

| | |
|---|---|
| 110: battery cell | 110B: body part |
| 110T: top part | 120: battery cell stack |
| 200: barrier layer | 200a: first barrier part |
| 200b: second barrier part | 200c: third barrier part |

## Claims

1. A battery module comprising:
a battery cell stack in which a plurality of battery cells are stacked, and
a barrier layer interposed between battery cells adjacent to each other among the plurality of battery cells,
wherein the barrier layer has a different thickness in accordance with the position.

2. The battery module of claim 1, wherein:
the thickness of the barrier layer increases toward the edge with respect to the surface facing a body part of the battery cell.

3. The battery module of claim 1, wherein:
the barrier layer comprises a first barrier part that covers the body part of the battery cell, and a second barrier part that extends from the first barrier part and covers a top part of the battery cell.

4. The battery module of claim 3, wherein:
a thickness of the first barrier part is larger than a thickness of the second barrier part.

5. The battery module of claim 4, wherein:
the second barrier part is formed of a flexible material.

6. The battery module of claim 5, wherein:
the top part of the battery cell comprises a first region covered by the second barrier part and a second region not covered by the second barrier part.

7. The battery module of claim 3, wherein:
the barrier layer further comprises a third barrier part that covers the end part of the battery cell around the electrode lead protruding from the battery cell.

8. The battery module of claim 7, wherein:
an opening through which the electrode lead passes is formed in the third barrier part.

9. The battery module of claim 1, wherein:
the barrier layer is formed of a flame retardant member.

10. The battery module of claim 9, wherein:
the barrier layer is formed of a silicon foam pad or a mica sheet.

11. The battery module of claim 1, wherein:
the barrier layer comprises at least two or more, and at least two or more battery cells are located between two adjacent barrier layers among the barrier layers.

12. The battery module of claim 1, wherein:
the barrier layer covers one side of both surfaces of the battery cell, extends from an upper side of the barrier layer and covers a portion of the other side of the battery cell.

13. The battery module of claim 12, wherein:
the barrier layer induces the direction of the flame generated in the battery cell due to the asymmetric structure.

14. A battery pack comprising the battery module of claim 1.
